# EUROPÄISCHE PATENTSCHRIFT

(11) **EP 2 002 056 B1**
(45) Veröffentlichungstag und Bekanntmachung des Hinweises auf die Patenterteilung: **28.10.2015**
(21) Anmeldenummer: 07727523.8
(22) Anmeldetag: 29.03.2007
(51) Int. Cl.: D21H 17/67, D21H 17/03, D21H 17/20, D21H 27/08

(54) **MIT ELEMENTAREM KOHLENSTOFF ANGEREICHERTES PAPIER**
PAPER ENRICHED WITH ELEMENTAL CARBON
PAPIER ENRICHI EN CARBONE ELEMENTAIRE

(30) Priorität: 31.03.2006 EP 06112091
(43) Veröffentlichungstag der Anmeldung: 17.12.2008
(73) Patentinhaber: PTS (Papiertechnische Stiftung) München, 80797 München (DE)
(72) Erfinder: HOFENAUER, Andreas Florian, 80802 München (DE); MARKUSCH, Ralf, 81925 München (DE)
(74) Vertreter: Isarpatent
(86) Internationale Anmeldenummer: PCT/EP2007/053051
(87) Internationale Veröffentlichungsnummer: WO 2007/113219

(56) Entgegenhaltungen:
- WO-A-01/64602
- US-A- 4 737 421
- US-A- 4 759 977
- US-A- 5 718 827
- US-A- 6 051 096
- US-A1- 2003 167 969
- US-A1- 2005 067 346
- US-A1- 2005 163 988
- US-A1- 2005 249 914

## Beschreibung

Die vorliegende Erfindung betrifft ein Verfahren zur Herstellung eines mit elementarem Kohlenstoff angereicherten Papiers oder einer Pappe, ein nach dem Verfahren hergestelltes Papier oder Pappe, ein Verfahren zum Beschichten bzw. Infiltrieren eines solchen Papiers oder einer solchen Pappe, ein Verfahren zur Pyrolyse eines solchen Papiers oder einer Pappe, ein pyrolysiertes Papier oder Pappe, die Verwendung eines pyrolysierten Papiers oder Pappe, sowie einen keramischen Körper.

Eine elegante Möglichkeit für die Herstellung dünnwandiger, komplex geformter Strukturkeramik, welche mit herkömmlichen Formgebungsverfahren, wie z.B. Extrudieren oder Spritzguss, nicht möglich sind, stellt der Einsatz von Papierstrukturen als Formgebungsinstrument dar. Dabei werden in erster Linie Papierstrukturen in keramische Schlicker eingetaucht und anschließend über Oxidation bzw. Pyrolyse und Sinterbrand in Keramikformteile überführt. Nachteilig in diesem Zusammenhang ist, dass in der Regel ein wiederholtes Eintauchen von Nöten ist, um die Papierstrukturen in einem ausreichenden Maß mit keramischen Füllstoffen anzureichern. Dadurch wird der Herstellungsprozess sehr aufwendig. Zudem ist eine gleichmäßige Verteilung der keramischen Füllstoffe nicht immer zu gewährleisten.

Eine andere Möglichkeit, Zellulosestrukturen in Keramikstrukturen umzuwandeln besteht mittels CVI (chemical vapour infiltration, chemische Gasphaseninfiltration)-Verfahren. Dabei werden pyrolysierte Zellulosestrukturen keramisch beschichtet und anschließend durch Oxidation in poröse Keramiken wie beispielsweise SiC-, TiC oder TiO₂-Keramiken überführt. Dieser Prozess ist jedoch sehr aufwendig und zudem teuer.

Pyrolysierte Materialien biogenen Ursprungs werden auch anderweitig bereits seit längerer Zeit für die Herstellung von Siliziumcarbid-Keramiken verwendet. Das Vermischen von Kohlenstoff und/oder Graphitpulver mit einem hoch kohlenstoffhaltigen Bindemittel wie pech-, harz- oder zellulosehaltigen Lösungen, und anschließend das Pressen in eine Form und eine Aushärtung durch eine Wärmebehandlung hat den Nachteil, dass ein hoher apparativer Aufwand notwendig ist und die Herstellung guter und reproduzierbarer Pulverund Bindemittelqualitäten erfordert. Die Ausschussraten bei derartigen Verfahren liegen entsprechend hoch.

Die DE 101 61 108 beschreibt ein Verfahren, bei dem ein Keramikbauteil auf Basis von Kohlenstoff unter Verwendung von zellulosehaltigen Halbzeugformteilen hergestellt wird. Das in Form eines Halbzeugformteils gebildete präkeramische Bauteile wird in einer nicht oxidierenden Gasatmosphäre pyrolysiert und anschließend beispielsweise durch Flüssigphasen- bzw. Gasphasensilizierung zu einem SiC-haltigen Verbundkörper umgesetzt. Ein Nachteil dieses Verfahrens besteht jedoch darin, dass ein hoher Masseverlust und eine damit einhergehende hohe Schrumpfung des pyrolysierten Körpers bzw. Keramikkörpers gegenüber dem Grünkörper besteht.

Um diesen Nachteil auszugleichen und um den Kohlenstoffgehalt im endgültigen, pyrolysierten Körper zu erhöhen, schlägt die DE 199 47 731 A1 vor, den bereits pyrolysierten Körper der aus einem Halbzeug aus zellulosehaltigem Material mit pyrolysierbarem Bindemittel erhalten wird, erneut mit Bindemittel zu tränken und anschließend zu pyrolysieren. Durch diese weitere Zuführung von kohlenstoffhaltigem Material und die anschließende Pyrolyse wird der Kohlenstoffgehalt des Körpers zwar erhöht, die Schrumpfung des ursprünglichen Grünkörpers durch die Pyrolyse wird dadurch jedoch nicht vermindert bzw. verhindert. Eine endkonturnahe Fertigung eines keramischen Körpers aus einem Grünkörper wird somit nicht möglich.

Eine weitere Möglichkeit die Schrumpfung eines Grünkörpers, der Zellulose enthält, während der Pyrolyse zu vermindern, wird in der DE 103 29 822 A1 vorgeschlagen. Hier soll unter anderem die Zugabe von Russ den Kohlenstoffgehalt erhöhen. Nachteilig an diesem Verfahren ist jedoch, dass hierbei im Trockenen Holzspäne mit Russ und einem Bindemittel wie beispielsweise Phenolharz verpresst werden. Durch ein derartiges Verfahren lassen sich lediglich größere Formkörper herstellen. Feinere Strukturen, insbesondere unterhalb von 2 mm lassen sich derart nicht herstellen.

Das US-Patent 4,737,421 betrifft Methoden zur Herstellung von kohlenstoffhaltigen Blättern auf der Basis von Cellulosefasern, thermisch härtbaren Harzen und Graphitpulver.

Die WO 02/32558 betrifft Verfahren zur Herstellung von flexiblen Membranen nach Methoden der Papierherstellung, wobei in einem ersten Schritt eine Grundmatrix auf der Basis von Fasermaterialien und einem Füllstoff wie Ruß hergestellt wird und die Oberfläche der Grundmatrix anschließend mit einem polymeren Zusatzstoff versehen und pyrolysiert wird.

Eine Aufgabe der vorliegenden Erfindung liegt darin, ein Papier oder eine Pappe bereitzustellen, die einen hohen Kohlenstoffgehalt aufweist und bei der Pyrolyse eine verminderte Schrumpfung aufweist. Eine weitere Aufgabe der vorliegenden Erfindung ist es, ein Verfahren zur Herstellung eines derartigen Papiers oder Pappe bereitzustellen. Es ist eine weitere Aufgabe der vorliegenden Erfindung, ein Verfahren zur Beschichtung eines derartigen, mit Kohlenstoff angereicherten Papiers oder Pappe, ein Verfahren zur Pyrolyse eines derartigen Papiers oder Pappe sowie ein hoch kohlenstoffhaltiges, pyrolysiertes Papier oder Pappe bereitzustellen. Schließlich ist es eine Aufgabe der vorliegenden Erfindung, ein Verfahren zum Herstellen eines keramischen Körpers aus dem pyrolysierten Papier oder Pappe und einen keramischen Körper sowie eine Verwendung des pyrolysierten Papiers sowie des Papiers in seinem Grünzustand bereitzustellen.

Die Aufgaben werden durch die unabhängigen Ansprüche gelöst.

Gemäß einem ersten Aspekt der vorliegenden Erfindung wird ein Verfahren zur Herstellung eines mit Kohlenstoff angereicherten Papiers oder einer mit Kohlenstoff angereicherten Pappe bereitgestellt. Das Verfahren umfasst das Vermischen mindestens eines bei der Papierherstellung üblichen Faserstoffs, insbesondere eines cellulosehaltigen Stoffs, mit mindestens einem Füllstoff und Stärke und/oder Latex, wobei mindestens ein Füllstoff elementaren Kohlenstoff umfasst, in Wasser als Lösungsmittel, zu einem Brei und anschließendes Verarbeiten des gebundenen Breis mit papiertechnischen Verfahren zu einem Papier und/oder einer Pappe, wobei der Gehalt an elementarem Kohlenstoff mindestens 40 Vol.-%, bezogen auf das Feststoffvolumen des Papiers oder der Pappe, beträgt, und wobei der Gesamtfüllstoffgehalt aller vorliegenden Füllstoffe von 40 bis 90 Vol.-%, bezogen auf das Feststoffvolumen des Papiers oder der Pappe, beträgt. Erfindungsgemäß wird in einem weiteren Aspekt ein nach dem Verfahren gemäß dem ersten Aspekt hergestelltes mit elementarem Kohlenstoff angereichertes Papier oder Pappe bereitgestellt. Dabei enthält das Papier oder die Pappe mindestens einen Faserstoff, mindestens einen Füllstoff und Stärke und/oder Latex, wobei als Füllstoff mindestens elementarer Kohlenstoff vorliegt. Der Gehalt an elementarem Kohlenstoff beträgt mindestens 40 Vol.-%, bezogen auf das Feststoffvolumen des Papiers, und der Gesamtfüllstoffgehalt aller vorliegenden Füllstoffe 40 bis 90 Vol.-%, bezogen auf das Feststoffvolumen des Papiers.

Der Vorteil des mit elementarem Kohlenstoff angereicherten Papiers oder Pappe liegt darin, dass der Kohlenstoffgehalt verglichen mit herkömmlichen Papieren deutlich erhöht wird. Dadurch kann die Schrumpfung bei der Pyrolyse eines derartigen Papiers vermindert werden. Bei Experimenten hat sich herausgestellt, dass die Schrumpfung des Papiers bei der Pyrolyse nicht ausreichend vermindert werden kann, wenn der Kohlenstoffgehalt des Papiers weniger als 15 Vol.-% beträgt. Insbesondere weist das Papier der vorliegenden Erfindung einen hohen Anteil an Füllstoff auf. Dieser hohe Füllstoffgehalt wird durch die Verwendung besonderer Retentionsmittel erreicht.

Elementarer Kohlenstoff ist ein unpolarer Stoff. Unpolare Stoffe werden durch das üblicherweise bei der Papierherstellung verwendete Lösungsmittel Wasser nicht oder nur sehr schlecht benetzt. Erst durch die Verwendung von Dispergiermitteln kann der Kohlenstoff überhaupt in einer Lösung mit Zellulosefasern dispergiert werden kann. Es ist jedoch dabei von Nachteil, dass beim üblichen Papierherstellungsverfahren große Mengen von Kohlenstoff im Lösungsmittel, das üblicherweise Wasser ist, verbleiben. Die Verbindung von elementarem Kohlenstoff mit den Zellulosefasern ist die Voraussetzung für die Aufnahme des Kohlenstoffs in das Papier, insbesondere wenn hohe Anteile von Kohlenstoff in dem Papier erreicht werden sollen. Die Anreicherung von Kohlenstoff in einem Papier kann nur durch die Wahl geeigneter Dispergier-, Benetzungs- und Retentionsmittel erfolgen. Durch die Verwendung von üblichen Papierherstellungsverfahren lassen sich insbesondere dünne Papiere mit einem hohen Kohlenstoffgehalt herstellen.

Das Papier oder die Pappe enthalten als essentiellen Bestandteil Stärke und/oder Latex. Sollte nicht ausdrücklich darauf hingewiesen werden, sollen beide Bestandteile Stärke und/oder Latex gleichbedeutend verwendet werden. Unter Stärke soll das zur Gruppe der Kohlenhydrate gehörende und aus α-D-Glukoseeinheiten aufgebaute Polysaccharid der Formel (C₆H₁₀O₅)ₙ verstanden werden. Unter Latex soll im Folgenden eine Bindemitteldispersionen verstanden werden. Bevorzugt besteht die Bindemitteldispersion aus synthetischen Copolymeren. Dabei können insbesondere bevorzugt Monomere verwendet werden, ausgewählt aus Styrol, Butadien, Acrylsäure und Acrylnitril. Die Bindemitteldispersion ist jedoch nicht darauf beschränkt und die oben genannten Monomere sollen lediglich beispielhaft genannt sein.

Sowohl die Stärke als auch das Latex können dazu dienen, den elementaren Kohlenstoff während des Papierherstellungsverfahrens an die Zellulosefasern zu binden. Beide Stoffe können daher sowohl als Binde- als auch als Retentionsmittel bei der Herstellung dienen. Sie verleihen dem Papier eine gute Festigkeit und Formbarkeit und zeichnen für die erhöhte Retention des Füllstoffs verantwortlich. Zudem verleihen sie dem fertigen Papier eine hohe Flexibilität, verglichen mit anderen, mit Füllstoffen beladenen Papieren.

Durch die erhöhte Flexibilität des mit Latex und/oder Stärke versetzten Papiers kann das gefüllte Papier beispielsweise auch für die Wellpappenherstellung eingesetzt werden, bei der üblicherweise kleine Biegeradien des Papiers realisiert werden müssen.

Des Weiteren wird die Verwendung eines mit elementarem Kohlenstoff angereicherten Papiers oder Pappe als Luftfilter, Sorptionsmedium für Gase oder Flüssigkeiten, als Elektrode, insbesondere als Batterieelektrode, oder im ABC-Schutz beschrieben.

Die Verwendung von Papier oder Pappe als Trägermedium für Kohlenstoff, insbesondere hochporösen Kohlenstoff, erlaubt die Herstellung von Luftfiltern und Sorptionsmedien in einfacher und ökonomischer Weise. Die weitere Verarbeitung eines Papiers gemäß der vorliegenden Erfindung zu beispielsweise einem Luftfilter und/oder einer Elektrode kann beispielsweise durch einfaches Zuschneiden erfolgen.

Ein weiterer Aspekt der vorliegenden Erfindung richtet sich auf die Beschichtung eines mit Kohlenstoff angereicherten Papiers oder einer mit Kohlenstoff angereicherten Pappe mit einem Schlicker, wobei der Schlicker organische Bindemittel und/oder kohlenstoffhaltige und/oder keramische und/oder metallische und/oder ligno-cellulosehaltige Zusatzstoffe in Form von Pulvern und/oder Fasern umfasst.

Gemäß eines weiteren Aspekts der vorliegenden Erfindung wird das mit Kohlenstoff angereicherte Papier oder die mit elementarem Kohlenstoff angereicherte Pappe, die in Form eines Grünkörpers vorliegt, einer Pyrolyse unterworfen, wobei die Pyrolyse in Inertgasatmosphäre bei einer Temperatur bis 1200°C, bevorzugt bis 800°C durchgeführt wird. Bei der Pyrolyse eines Papiers gemäß der vorliegenden Erfindung tritt gegenüber einem nicht mit Kohlenstoff angereicherten Papier eine verminderte Schrumpfung bzw. ein verminderter Gewichtsverlust auf.

Ein weiterer Aspekt der vorliegenden Erfindung betrifft ein nach dem oben beschrieben Verfahren hergestelltes pyrolysiertes Papier oder eine pyrolysierte Pappe, die aus einem mit elementarem Kohlenstoff angereicherten Papier oder einer mit elementarem Kohlenstoff angereicherten Pappe hergestellt wurde.

Gemäß noch eines weiteren Aspekts der vorliegenden Erfindung wird eine Verwendung eines pyrolysierten Papiers oder einer pyrolysierten Pappe als Luftfilter, Sorptionsmedium für Gase und/oder Flüssigkeiten, als Elektrode, insbesondere als Batterieelektrode, im ABC-Schutz, als dünnwandiges Konstruktionsmaterial oder für eine Brennstoffzelle bereitgestellt.

Des Weiteren beschrieben ist das Sintern eines Papiers oder einer Pappe gemäß der Erfindung oder eines pyrolysierten Papiers oder einer pyrolysierten Pappe, das als weiteren Füllstoff neben Kohlenstoff einen keramischen, sinterbaren Füllstoff aufweist, bei einer Temperatur von über 1200°C, bevorzugt über 1400°C.

Ein weiterer Aspekt der vorliegenden Erfindung betrifft das Infiltrieren eines mit elementarem Kohlenstoff angereicherten Papiers oder einer mit elementarem Kohlenstoff angereicherten Pappe, oder eines pyrolysierten Papiers oder einer pyrolysierten Pappe, mit einem flüssigen Metall, wobei das Metall vorzugsweise Silizium, Aluminium oder Kupfer ist, und wobei das Infiltrieren in Inertgasatmosphäre und/oder bei einer Temperatur bis 1800°C durchgeführt wird.

Noch ein weiterer Aspekt der vorliegenden Erfindung betrifft einen keramischen Körper, der durch Infiltrieren eines mit Kohlenstoff angereicherten Papiers oder eines pyrolysierten Papiers mit einem flüssigen Metall herstellbar ist.

Des Weiteren beschrieben ist die Verwendung eines keramischen Körpers, der aus einem mit elementarem Kohlenstoff angereicherten Papier oder Pappe als präkeramischem Körper hergestellt wurde, bei der Mikro-, Ultrat- oder Nanofiltration, für keramische Porenbrenner, als keramische Bauelemente, insbesondere für keramische Wärmetauscher und für Dünnschichtsolarzellen.

Wenn im folgenden von Papier und/oder Pappe gesprochen wird, so soll dies Papier und Pappe umfassen. Die Begriff Papier und Pappe werden in dieser Anmeldung synonym verwendet. Unter dem Begriff Papier oder Pappe soll ein zellulosehaltiges Produkt verstanden werden, das durch papiertechnische Herstellungsverfahren nasstechnisch erzeugt wird.

In den abhängigen Ansprüchen finden sich vorteilhafte Weiterbildungen und Verbesserungen des jeweiligen Erfindungsgegenstandes.

Der Gehalt an Kohlenstoff in dem Papier oder der Pappe liegt bei mindestens 40 Vol.-%. Der Gesamtfüllstoffgehalt in dem Papier oder der Pappe beträgt 40 bis 90 Vol.-%. Die Angabe Vol.-% bezieht sich dabei auf das Feststoffvolumen des Papiers oder der Pappe. Eventuell in dem Papier oder der Pappe vorliegende Hohlräume wie Poren tragen nicht zum Feststoffvolumen des Papiers oder der Pappe bei. Das Feststoffvolumen ist daher vom Grad der Komprimierung des Papiers oder der Pappe unabhängig. Der Grad der Komprimierung eines Papiers kann wunschgemäß durch Kalandieren eingestellt werden. Dabei werden die Hohlräume im Papier verkleinert, und das Papier verdichtet. Die Zusammensetzung des Papiers wird dabei jedoch nicht verändert. Folglich soll auch die Zusammensetzung des Papiers unabhängig vom Verdichtungsgrad des Papiers sein.

Gemäß einer weiteren bevorzugten Weiterbildung der vorliegenden Erfindung wird der elementare Kohlenstoff in Form von Graphit, Aktivkohle, Russ, Diamant, Diamantfeinstaub, Fullerenen, Kohlenstoff-Nanotubes, Kohlenstofffasern oder als amorpher Kohlenstoff eingebracht. Es ist dabei möglich, jede erdenkliche Modifikation des Kohlenstoffs zu verwenden.

Als Fullerene werden sphärische Moleküle aus Kohlenstoffatomen bezeichnet, die eine Element-Modifikation des Kohlenstoffs (neben Diamant und Graphit) darstellen. Kohlenstofffasern oder Kohlefasern sind industriell hergestellte Fasern aus kohlenstoffhaltigen Ausgangsmaterialien, die durch Pyrolyse in graphitartig angeordneten Kohlenstoff umgewandelt werden. Kohlenstoffnanoröhren oder auch Kohlenstoff-Nanotubes sind mikroskopisch kleine röhrenförmige Gebilde (molekulare Nanoröhren) aus Kohlenstoff. Ihre Wände bestehen, wie die der Fullerene oder wie die Ebenen des Graphits, nur aus Kohlenstoff, wobei die Kohlenstoffatome eine wabenartige Struktur mit Sechsecken und jeweils drei Bindungspartnern einnehmen. Aktivkohle ist eine feinkörnige Kohle mit großer innerer Oberfläche, die als Adsorptionsmittel eingesetzt wird. Aktivkohle besteht überwiegend aus Kohlenstoff (meist > 90 %) mit stark poröser Struktur. Die Poren sind wie bei einem Schwamm untereinander verbunden. In amorphem Kohlenstoff besitzen die Atome, im Gegensatz zu den bekannten Modifikationen, keine geordnete Struktur, sondern ein unregelmäßiges Muster. Lediglich eine Nahordnung kleiner Bereiche kann festgestellt werden. Eine kristalline Gestalt liegt bei amorphem Kohlenstoff nicht vor.

Insbesondere soll in der vorliegenden Anmeldung der Begriff Kohlenstoff für das chemische Reinelement Kohlenstoff in seiner Oxidationsstufe 0 verwendet werden, d.h. für elementaren Kohlenstoff. Lediglich wenn gesondert darauf hingewiesen wird, kann Kohlenstoff auch in seiner gebundenen Form vorliegen. Beispielsweise können Phenolharze oder Zellulosefasern als Kohlenstoff enthaltende Materialien bezeichnet werden. Diese Materialien weisen in ihrer Struktur Kohlenstoff in anderen Oxidationsstufen als der Oxidationsstufe 0 auf. Diese Materialien bilden bei der Pyrolyse elementaren Kohlenstoff. Derartige Kohlenstoff enthaltende Materialien werden jedoch nicht als beispielsweise Kohlenstoff angereichertes Material bezeichnet. Der Begriff Kohlenstoff wird daher in dieser Erfindung stets für das reine Element Kohlenstoff in seiner Oxidationsstufe 0 verwendet, sollte dies nicht gesondert angegeben sein oder sich eindeutig aus dem Kontext ergeben.

Gemäß einer weiteren bevorzugten Weiterbildung der vorliegenden Erfindung können in dem Papier oder in der Pappe neben Kohlenstoff weitere Füllstoffe vorliegen. Diese Füllstoffe können beispielsweise metallische Füllstoffe, bevorzugt Metalle wie beispielsweise Aluminium, Kupfer und/oder Silizium sein. Silizium wird in diesem Zusammenhang als Metall bezeichnet. Es können jedoch auch keramische Füllstoffe, bevorzugt in Form von Carbiden, Oxiden, Nitriden und/oder Boriden vorliegen. Besonders bevorzugte keramische Füllstoffe schließen Siliziumcarbid, Borcarbid, Titatcarbid, Aluminiumoxid, Zirkoniumoxid, Titandioxid, Siliziumnitrid, Aluminiumnitrid, Bornitrid und Borcarbid ein. Auch die Verwendung von ligno-zellulosehaltigen Füllstoffen und/oder organischen Füllstoffen wie beispielsweise Phenolharze soll von der Erfindung mitumfasst werden.

Gemäß einer anderen bevorzugten Weiterbildung der vorliegenden Erfindung liegt der Kohlenstoff und/oder die weiteren Füllstoffe als Pulver und/oder Fasern vor. Bevorzugte Partikelgrößen bzw. Faserdurchmesser umfassen weniger als 50 µm, insbesondere weniger als 30 µm.

Das Papier oder die Pappe gemäß der vorliegenden Erfindung kann in einer weiteren Ausgestaltung zusätzlich organische Bindemittel umfassen. Organische Bindemittel sind dabei diejenigen organischen Bindemittel, die einem Fachmann bei der Herstellung von Papier und/oder Pappe geläufig sind und können beispielsweise Phenolharze umfassen.

Gemäß einer anderen bevorzugten Ausgestaltung der vorliegenden Erfindung werden als Faserstoff für das Papier oder die Pappe die bei der Papierherstellung üblicherweise verwendeten Faserstoffe, wie beispielsweise Sulfatzellstoff, Sulfidzellstoff, nach thermomechanischen Verfahren (TMP) hergestellter Zellstoff, nach chemo-thermomechanischem Verfahren (CTMP) hergestellter Zellstoff, Baumwolle, Linters und/oder Holzschliff, verwendet.

Das gemäß einer anderen bevorzugten Ausgestaltung der vorliegenden Erfindung hergestellte Papier oder die Pappe weist eine Dicke von 50 bis 20000 µm, bevorzugt von 100 bis 1500 µm auf.

Das Papier oder die Pappe kann weitere Zusatzstoffe enthalten. Bevorzugte Zusatzstoffe sind beispielsweise Benetzungs- und/oder Dispergiermittel. Diese Benetzungs- und/oder Dispergiermittel ermöglichen die Dispersion der unterschiedlichen Stoffe in dem Lösungsmittel. Benetzungs- und/oder Dispergiermittel können kationisch- und/oder anionisch-stabilisierende Mittel, wie beispielsweise Polyacrylate oder andere Polymere sein. Ein bevorzugtes Dispergiermittel ist beispielsweise ein Natriumpolyacrylat, insbesondere Polysalz-S (BASF AG, Ludwigshafen) als anionisch-stabilisierendes Mittel. Ein bevorzugt verwendetes Benetzungsmittel schließt Lumiten P-F (BASF AG), ein Proyplen-Ethylen-Blockcopolymerisat, ein. Die Benetzungs- und/oder Dispergiermittel werden in für den Fachmann üblichen Mengen eingesetzt. Beispielsweise kann das Benetzungs- und/oder Dispergiermittel in einer Menge von 0,05 bis 5 Gew.-%, bevorzugt in einer Menge von 0,1 bis 3 Gew.-% eingesetzt werden.

Gemäß der vorliegenden Erfindung wird Latex und/oder Stärke als Retentionsmittel und Bindemittel verwendet. Insbesondere bevorzugt werden geladenes Latex und/oder geladene Stärke, bevorzugt in einem Anteil von 0,2 bis 15 Gew.-% und insbesondere bevorzugt mit einem Anteil von 1 bis 10 Gew.-%, bezogen auf die Trockenmasse des Papiers oder der Pappe (atro), verwendet. Ganz besonders bevorzugt wird das Latex und/oder die Stärke in einem Anteil von 1,5 bis 5 Gew.-% eingesetzt. Durch den geringen Anteil an Latex und/oder Stärke als Bindemittel kann das Papier oder die Pappe porös ausgestaltet werden, wodurch eine hohe Luftdurchlässigkeit erreicht oder beibehalten werden kann.

Bevorzugt werden zudem Retentionsmittel zur Retention der Füllstoffe bei der Papierherstellung verwendet. Dabei können alle im Stand der Technik bekannten Retentionsmittel gemäß der vorliegenden Erfindung verwendet werden. Bevorzugte Retentionsmittel sind in der Papierherstellung bekannte Polymere, insbesondere Polyvinylamine, Polyacrylamide, Polyamidamine, aber auch anorganische Retentionsmittel wie Aluminiumsulfat und/oder Bentonit. Die Polymere oder die anorganischen Retentionsmittel werden bevorzugt in einer Menge von 0,01 bis 7 Gew.-% und besonders bevorzugt von 0,1 bis 2 Gew.-%, bezogen auf das trockene Gesamtgewichts des Papiers oder der Pappe, verwendet.

Wenn in dieser Anmeldung Anteile definiert sind, beziehen sich die Gewichtsteile, sofern nicht anders definiert, auf das trockene Gewicht des jeweiligen Stoffes in Relation zum trockenen Gesamtgewicht.

Gemäß einer weiteren bevorzugten Ausgestaltung der vorliegenden Erfindung weist das Papier oder die Pappe bei einer vollständigen Pyrolyse einen Gewichtsverlust von weniger als 50 Gew.-%, bevorzugt weniger als 40 Gew.-%, insbesondere bevorzugt weniger als 30 Gew.-% und am bevorzugtesten von weniger als 20 Gew.-%, bezogen auf das trockene Gesamtgewicht des Papiers oder der Pappe, auf.

Das Papier oder die Pappe kann bevorzugt papiertechnisch geformt vorliegen, zum Beispiel als Wellpappe, Waben-, Wickelhülsen- oder Rohrstruktur.

Ziel der vorliegenden Erfindung ist es, ein mit elementarem Kohlenstoff angereichertes Papier oder eine mit elementarem Kohlenstoff angereicherte Pappe bereitzustellen. Dabei ist es besonders wichtig, dass der Kohlenstoff homogen in dem Papier oder der Pappe verteilt ist, und der pyrolysierte Körper eine ausreichende Porosität aufweist, damit der Kohlenstoff in einen keramischen Körper umgewandelt werden kann.

Der Kohlenstoffeintrag eines pyrolysierten Körpers kann aus verschiedenen Quellen stammen. Zum einen kann der Kohlenstoff direkt bei der Papierherstellung eingebracht werden. Weiterhin tragen die Zellulosefasern des Papiers bei der Pyrolyse zum Kohlenstoffgehalt des pyrolysierten Papiers bei. Schließlich können auch weitere Zusatzstoffe wie beispielsweise Bindemittel, insbesondere Phenolharz, oder auch Retentionsmittel wie Latex oder Stärke sowie ligno-cellulosehaltige Zusätze in pyrolysierter Form zum Kohlenstoffgehalt beitragen. Der Kohlenstoffgehalt ebenso wie die Struktur des pyrolysierten Körpers, insbesondere die Mikro- und Porenstruktur, kann über die Anteile dieser Stoffe gesteuert werden. Feine ligno-cellulosehaltige Pulver führen beispielsweise nach der Pyrolyse zu einer homogenen Kohlenstoffmikrostruktur mit einer homogenen räumlichen Porenverteilung, welche eine gleichmäßige Infiltration beispielsweise mit flüssigem Silizium und eine gute Konvertierung des Kohlenstoffes zu Siliziumcarbid ermöglicht.

Zudem ist es wichtig, dass der Grünkörper während der Pyrolyse lediglich eine geringe Schrumpfung bzw. Gewichtsverlust aufweist. Herkömmliches Papier weist bei einer Pyrolyse einen Gewichtsverlust von etwa 70 Gew.-% auf. Besonders kohlenstoffreiche Verbindungen, wie beispielsweise ein Phenolharz, weisen dagegen einen geringeren Gewichtsverlust bei der Pyrolyse auf. Durch die Verwendung von elementarem Kohlenstoff in dem Papier kann der Gewichtsverlust während der Pyrolyse weiter reduziert werden, da elementarer Kohlenstoff während der Pyrolyse keinen oder annähernd keinen Gewichtsverlust aufweist. Durch einen geringen Gewichtsverlust wird es möglich, den Grünkörper entkonturnah zu gestalten.

Der maximale Füllstoffeintrag in ein Papier oder eine Pappe ist beschränkt durch den Verlust der Integrität des Papiers oder der Pappe bei einem zu hohen Füllstoffgehalt. Der maximale Füllstoffgehalt wird daher auf 90 Vol.-%, bezogen auf das Feststoffvolumen des Papiers oder der Pappe, beschränkt. Der Zusammenhang zwischen einem Füllstoffgehalt gemessen in Vol.-% und einem Füllstoffgehalt in Gew.-% wird über die Dichte der Füllstoffe hergestellt. Wird lediglich Kohlenstoff als Füllstoff verwendet, so entspricht ein Anteil von 15 Vol.-% Kohlenstoff einem Gewichtsanteil von 20 Gew.-%. Ein Anteil von 20 Vol.-% entspricht einem Anteil von 25 Gew.-%. Werden schwerere Füllstoffe, wie beispielsweise keramische Füllstoffe zusätzlich verwendet, sinkt der Gewichtsanteil der Kohlenstofffraktion. Der Anteil der Füllstoffe, die ein Papier maximal aufnehmen kann, hängt jedoch vornehmlich von dem Volumen der Füllstoffe ab. Daher wird der Anteil der Füllstoffe bevorzugt als Volumenanteil angegeben.

Das Papier oder die Pappe können zudem nach der Herstellung, d.h. als Grünkörper, und/oder nach der Pyrolyse beschichtet werden. Diese Beschichtung erfolgt bevorzugt mit einem Material, das eine ähnliche Schrumpfung und einen ähnlichen Gewichtsverlust wie das Papier besitzt. Somit wird verhindert, dass Spannungen zwischen der Beschichtung und dem Papier während der Pyrolyse auftreten. Dem Beschichtungsmaterial werden daher ähnliche Stoffe beigemischt, wie sie auch das Papier selbst aufweist. Auch die Anteile der Zusammensetzung sind bevorzugt ähnlich denen des Papiers. Anstelle von Zellulosefasern können hier beispielsweise Holzmehle beigefügt werden.

In einen Schlicker für eine Beschichtung können demnach ebenfalls Zellulosefasern, Kohlenstoff sowie weitere Zusatzstoffe, wie beispielsweise Bindemittel, Dispergiermittel, Retentionsmittel und Benetzungsmittel zugegeben werden. Auch keramische oder andere Füllstoffe können dem Beschichtungsschlicker beigemischt werden.

Zur Herstellung eines Papiers oder Pappe gemäß der vorliegenden Erfindung werden Faserstoffe und Füllstoffe in einem Lösungsmittel vermischt. Als Lösungsmittel kommt bevorzugt Wasser zum Einsatz. Die Faserstoffe müssen zusammen mit den Füllstoffen einen homogenen Brei geben. Bei Verwendung von elementarem Kohlenstoff, beispielsweise Russ, ist jedoch eine homogene Verteilung und Aggregation des Kohlenstoffs an die Faserstoffe nur schwer zu erreichen. Erfolgt keine Bindung des Kohlenstoffs an die Fasern, wird der Eintrag an Kohlenstoff an dem endgültigen Papier nur sehr gering sein, da ein Großteil des Kohlenstoffes nicht durch das Papiersieb beim Papierherstellungsprozess zurückgehalten wird und dem endgültigen Papier dadurch nicht zur Verfügung steht. Daher ist es vorteilhaft, um einen hohen Anteil an Kohlenstoff in dem endgültigen Papier oder der Pappe zu erreichen, wenn die Kohlenstoffpartikel oder Fasern an den Faserstoff gebunden werden können.

Die Bindung der Kohlenstoffpartikel kann beispielsweise über elektrostatische Anziehungskräfte an den Faserstoff erfolgen. Um eine derartige Bindung zu erreichen, können sogenannte Retentionsmittel zugegeben werden. Die Kombination der Retentionsmittel kann die Bindung der Kohlenstoffpartikel an die Faserstoffe und somit die Retention des Kohlenstoffs in dem Papier oder der Pappe maßgeblich beeinflussen.

Bevorzugt werden hier Latex und Stärke, die jeweils auch geladen sein können. Latex und/oder Stärke werden bevorzugt in einem Anteil von 0,2 bis 15 Gew.-%, besonders bevorzugt von 1 bis 10 Gew.-% bezogen auf das trockene Gesamtgewicht (atro) des Papiers oder der Pappe zugegeben. Auch andere Retentionsmittel, insbesondere Polymere, wie beispielsweise Polyvinylamin, Polyacrylamid und Polyamidamin, oder anorganische Retentionsmittel wie Aluminiumsulfat und/oder Bentonit können als Retentionsmittel verwendet werden. Diese werden bevorzugt in einer Menge von 0,01 bis 7 Gew.-%, und besonders bevorzugt von 0,1 bis 2 Gew.-% bezogen auf das trockene Gesamtgewicht des Papiers oder der Pappe verwendet. Auch eine Kombination mehrerer Retentionsmittel ist möglich. Besonders bevorzugt ist eine Kombination von geladenem Latex oder geladener Stärke mit einem polymeren Retentionsmittel. Durch eine derartige Kombination von Retentionsmitteln wird ein hoher Grad an Füllstoffgehalt im endgültigen Papier erreicht.

Nachdem die Füllstoffe, insbesondere der Kohlenstoff, an die Fasern gebunden worden sind, kann der Brei zu einem Papier oder zu einer Pappe mit herkömmlichen papiertechnischen Verfahren verarbeitet werden. Anschließend kann das Papier oder die Pappe papiertechnisch zu Wellpappe, Wabenbinde- oder Rohrstrukturen geformt werden.

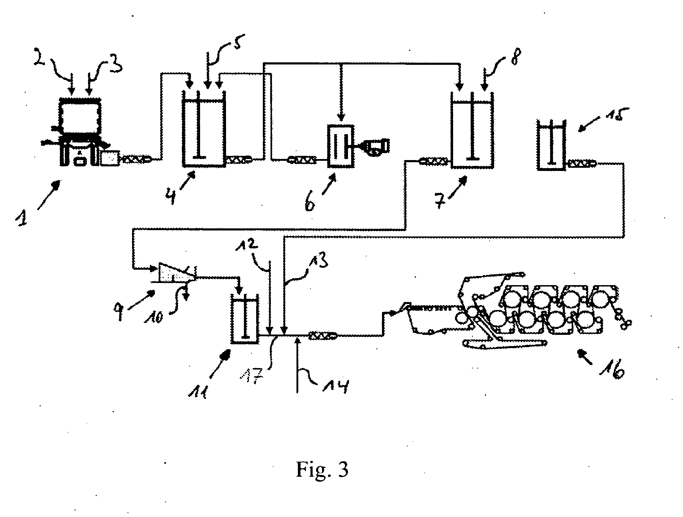

Bei den Herstellungsverfahren gemäß der vorliegenden Erfindung werden übliche, dem Fachmann bekannte Papierherstellungsverfahren und -geräte verwendet. Das mit elementarem Kohlenstoff angereicherte Papier wird demnach durch leicht modifizierte herkömmliche Papierherstellungsverfahren hergestellt. Insbesondere soll im Folgenden mit Verweis auf Figur 3 auf die Neuerungen im Herstellungsprozess eingegangen werden.

Zunächst wird Zellstoff (2) in einem Pulper (1) mit einem Lösungsmittel (3), wie beispielsweise Wasser, versetzt und aufgeschlagen, um eine Pulpe herzustellen. Der Pulper kann dabei beispielsweise ein Volumen von 100 l besitzen. Es kann jedoch auch ein Pulper mit einem größeren oder kleineren Volumen verwendet werden. Die Pulpe besitzt beispielsweise einen Feststoffgehalt von ungefähr 5 Gew.-%, wenn sie in dem Pulper aufgeschlagen wurde. Es ist jedoch auch möglich, dass die Pulpe einen höheren oder geringeren Feststoffgehalt an Zellstoff besitzt.

Anschließend wird die derart hergestellte Pulpe in eine Dickstoffbütte (4), die beispielsweise ein Volumen von 1000 l besitzen kann, verbracht. Dort wird der Zellstoff durch eine weitere Zugabe von Lösungsmittel, wie beispielsweise Wasser, verdünnt, beispielsweise auf einen Feststoffgehalt von 0,5 Gew.-%, und anschließend in eine Mischbütte (7) überführt.

Wahlweise kann die Pulpe in einem Refiner (6) gemahlen werden, um die Größe des Zellstoffs genauer einstellen zu können. Dabei werden die Zellstofffasern defibrilliert und verfeinert. Dieser Schritt kann sich direkt an die Verdünnung in der Dickstoffbütte (4) anschließen, oder auch während der Verdünnung vorgenommen werden, wenn die im Refiner (6) verarbeitete Pulpe wieder zurück in die Dickstoffbütte (4) geführt wird.

Zur Lagerung wird der Zellstoffbrei in eine Mischbütte (7) überführt. Wahlweise kann der Zellstoffbrei dort weiter mit Lösungsmittel (8), wie beispielsweise Wasser, verdünnt werden.

Zur Verarbeitung des Zellstoffbreis wird dieser wahlweise über einen Plansortierer (9) in eine Maschinenbütte (11) verbracht. Im Plansortierer (9) kann der Zellstoffbrei mechanisch von größeren Partikeln befreit werden. Diese können über eine Abführung (10) aus dem Zellstoffbrei entfernt werden. Beispielsweise können somit Partikel mit einer Größe von über 1,5 mm entfernt werden. Derartige Partikel könnten sich nachteilig auf die Verarbeitung des Zellstoffbreis in einer Papiermaschine (16) auswirken.

In einem separaten Mischbehälter (15) wird eine Kohlenstoff enthaltende Aufschlämmung oder Slurry hergestellt. Dazu wird ein Lösungsmittel, beispielsweise Wasser, mit Kohlenstoff vermischt. Wahlweise können auch ein oder mehrere weitere Füllstoffe neben Kohlenstoff der Slurry beigemischt werden. In einer bevorzugten Ausführungsform der Erfindung besitzt die Kohlenstoff enthaltende Slurry einen Feststoffgehalt von ungefähr 40 bis 60 Gew.-%, bevorzugter ungefähr 45 bis 55 Gew.-% und am bevorzugtesten ungefähr 50 Gew.-%.

Vor Aufbringen des Zellstoffbreis auf ein Papiersieb in einer Papiermaschine (16) wird der Zellstoffbrei mit einem Retentionsmittel, der Kohlenstoff enthaltenden Slurry und Stärke und/oder Latex versetzt. In einem bevorzugten Ausführungsbeispiel wird der Zellstoffbrei zunächst mit einem Retentionsmittel (12) versetzt. Dies kann beispielsweise durch Zugabe des Retentionsmittels (12) zu der Überführungsleitung (17) erfolgen.

Nachdem das Retentionsmittel (12) und der Zellstoffbrei gut miteinander vermischt sind, beispielsweise nach etwa 30 Sekunden, kann die Kohlenstoff enthaltende Slurry (13) zugegeben werden. Nach einer entsprechenden Vermischung, beispielsweise nach etwa 30 Sekunden, wird zuletzt die Stärke und/oder das Latex zugegeben (14).

Beim Aufbringen eines derart hergestellten, Kohlenstoff enthaltenden Zellstoffbreis auf ein Papiersieb in einer Papiermaschine (16) kann durch übliche Papierherstellungsverfahren ein Kohlenstoff enthaltendes Papier hergestellt werden. Dabei wird ein hoher Anteil der zugegebenen Slurry an die Zellstofffasern des Papier gebunden und somit in das Papier integriert.

Der hohe Grad an Retention des Kohlenstoffs und wahlweise weiterer Füllstoffe erfolgt bevorzugt über ein Zwei-Komponenten-Retentionssystem. In einem bevorzugten Ausführungsbeispiel wird die negative Oberflächenladung der Zellstofffasern durch Zugabe eines positiven Retentionsmittels, wie beispielsweise eines kationischen Polymers, die Oberflächenladung der Zellstofffasern invertiert. Dabei kann das positive Retentionsmittel im Überschuss in Bezug auf die Zellstofffasern zugegeben werden.

Wenn im Folgenden von geladenem Zellstoff und/oder geladenem Füllstoff gesprochen wird, so bezieht sich dies auf die nach außen wirksame, effektive Oberflächenladung. Der Zellstoff selbst bzw. der Füllstoff selbst muss dabei nicht geladen sein. Durch benetzen des Zellstoffs bzw. des Füllstoffs werden diesen Stoffen eine Ladung verliehen.

Durch die anschließende Zugabe der Kohlenstoff enthaltenden Slurry kann das im Überschuss zugegebene positive Retentionsmittel auch die Kohlenstoffpartikel, welche durch ein Benetzungsmittel, vorzugsweise Polysalz S, zunächst eine negative Oberflächenladung aufweisen, und wahlweise die zusätzlichen Füllstoffe, positiv laden. Durch die positive Ladung sowohl der Zellstofffasern als auch der Kohlenstoffpartikel, und wahlweise der zusätzlichen Füllstoffe, stoßen sich die Zellstofffasern und die Kohlenstoffpartikel ab. In der Aufschlämmung liegen somit positiv geladene Zellstofffasern und positiv geladene Füllstoff vor.

Die positiv geladenen Zellulosefasern und der positiv geladene Füllstoff können durch die Abstoßung der positiven Ladungen nicht miteinander in Verbindung gebracht werden.

Eine Anhaftung der Füllstoffe, insbesondere des Kohlenstoffs, an die Zellulosefasern erfolgt somit nicht oder nicht in einem ausreichenden Maß.

Anschließend kann durch die Zugabe eines zweiten Retentionsmittels in Form von negativ geladener Stärke und/oder negativ geladenem Latex eine Bindungswirkung des zweiten Retentionsmittels erfolgen. Dadurch werden die positiv geladenen Zellstofffasern und der positiv geladene Füllstoff durch das negativ geladene zweite Retentionsmittel miteinander verbunden. Es erfolgt eine Bindung oder Anhaftung des Füllstoffs, insbesondere des Kohlenstoffs, an die Zellstofffaser.

Die Stärke bzw. der Latex wirken dabei als Bindemittel und verbinden den Füllstoff mit dem Zellulosematerial. Dieses System wird üblicherweise als Zwei-Komponenten-Retentionssystem bezeichnet. Dabei wird ein erstes Retentionsmittel zugegeben, das beispielsweise eine positive Ladung sowohl dem Zellstoff als auch dem Füllstoff verleiht. Es ist jedoch auch möglich, dass eine negative Ladung durch das erste Retentionsmittel verliehen wird.

Durch Zugabe eines zweiten Retentionsmittels, das üblicherweise eine entgegengesetzte Ladung besitzt, werden die anfänglich beispielsweise positiv geladenen Zellstoffpartikel und positiv geladenen Füllstoffe miteinander verbunden.

In einer bevorzugten Ausführungsform der vorliegenden Erfindung werden sowohl die Zellstofffasern als auch die Füllstoffe durch ein entsprechendes Retentionsmittel gleichnamig, beispielsweise positiv, geladen. In einem weiteren Schritt können dann die Fasern und die Füllstoffe durch ein entgegengesetzt geladenes, beispielsweise negativ geladenes, Retentions- und/oder Bindemittel aneinander gebunden werden. Somit kann eine hohe Retention von Füllstoff bei der papiertechnischen Verarbeitung erreicht werden.

In einer besonders bevorzugten Weiterbildung ist die Stärke und/oder der Latex negativ geladene Stärke und/oder negativ geladener Latex.

In einer weiteren, bevorzugten Ausführungsform der Erfindung kann ein Kohlenstoff enthaltendes Papier mittels eines Drei-Komponenten-Retentionssystem hergestellt werden. Dabei kann beispielsweise eine kationische Stärke, eine anionische Stärke sowie ein drittes, dem Fachmann bekanntes Retentionsmittel eingesetzt werden.

In einem Drei-Komponenten-Retentionssystem kann beispielsweise der negativ geladene Zellstoff mittels kationischer bzw. positiv geladener Stärke positiv geladen werden. Durch die Zugabe der kationischen Stärke im Überfluss kann danach auch der Füllstoff durch die kationische Stärke positiv geladen werden. Anschließend kann durch Zugabe einer anionischen bzw. negativ geladenen Stärke eine Verknüpfung von Zellulose und Füllstoff erfolgen. Schließlich kann eine Fixierung durch ein kationisches bzw. positiv geladenes Fixier- und/oder Retentionsmittel, wie beispielsweise ein kationisches bzw. positiv geladenes Polymer, erfolgen.

In einer bevorzugten Weiterbildung der Erfindung wird eine kationische Stärke zu einem Faserstoff zugegeben. Insbesondere bevorzugt wird dabei die kationische Stärke im Überschuss derart zugegeben, dass auch der anschließend zugegebene Füllstoff kationisch geladen wird. Im nächsten Schritt wird durch Zugabe einer anionischen Stärke der Füllstoff an die Faser gebunden und somit retendiert. Der Retentionsgrad kann weiter erhöht werden, wenn in einem letzten Schritt ein kationisches Fixiermittel, bevorzugt ein kationisches Polymer, zugegeben wird. Durch die Kombination von drei unterschiedlichen Retentions-/Fixiermitteln kann ein besonders hoher Retentionsgrad erreicht werden.

In den Ausführungen der Anmeldung sollen kationisch und positiv geladen, sowie anionisch und negativ geladen gleichbedeutend verstanden werden. Beispielsweise entspricht eine kationische Stärke einer positiv geladenen Stärke, und ein kationischer Latex einem positiv geladenen Latex.

Erfindungsgemäß ist mindestens eines der eingesetzten Retentionsmittel eine Stärke und/oder Latex. In einer bevorzugten Ausführungsform ist in einem Zwei-Komponenten-Retentionssystem eines der Retentionsmittel eine Stärke und/oder Latex, und das andere Retentionsmittel ist nicht Stärke und/oder Latex. Aufgabe der Retentionsmittel ist es, die Oberfläche des Zellstoffs bzw. des Füllstoffs mit einer Ladung zu versehen. Ein Fachmann kann daher durch Kombination geeigneter Retentionsmittel ein System auswählen, das eine hohe Retention von Füllstoffen, insbesondere Kohlenstoff, erlaubt. Dabei kann ein Fachmann die Menge an zugegebenen Retentionsmitteln durch einfache Experimente bestimmen.

Die Herstellung des Papiers erfolgt in einem hochverdünnten Medium. Bevorzugt liegt der Gesamtfeststoffgehalt der Aufschlämmung vor Papierherstellung im Bereich von 0,1 bis 15 Gew.-%, bevorzugter im Bereich von 0,5 bis 3 Gew.-%. Erst durch die Verwendung des Latex und/oder der Stärke als Retentionsmittel wird es möglich, trotz einer hohen Verdünnung einen hohen Anteil an elementarem Kohlenstoff als Füllstoff im Papier zurückzubehalten. In derart hoch verdünnten Systemen kann üblicherweise eine Retention von Kohlenstoff im endgültigen Papier oder Pappe nicht ausreichend bewirkt werden.

Im beschriebenen Verfahren wird das Kohlenstoffpulver bzw. Kohlenstoffpulver in Kombination mit anderen Füllstoffen, d.h. alle Füllstoffe, zu mindestens 50 % retendiert. Bevorzugt liegt die Füllstoffretention bei mind. 60 % und besonders bevorzugt bei mindestens 80 % . In einer besonders bevorzugten Weiterbildung werden die Füllstoffe zu mindestens 85 % retendiert. Der Grad der Retention bzw. die Retention gibt den Anteil an zugeführtem Füllstoff an, der nach der Blattbildung im Papiergefüge verbleibt.

Gemäß einer bevorzugten Weiterbildung können hochvoluminöse Papiere hergestellt werden, in dem mit Gas gefüllte Mikrosphären aus Plastikmaterial zugegeben werden. Insbesondere geeignet ist die Zugabe von Expancel^{®} (Akzo Nobel). Die Zugabe der Mikrosphären erlaubt es, ein hochvoluminöses Papier herzustellen, ohne das Gewicht des Papiers wesentlich zu erhöhen.

Präkeramische Körper können auch nach dem LOM (laminated object manufacturing)-Verfahren hergestellt werden. Das LOM-Verfahren ist ein dem Rapid-Prototyping-Verfahren ähnliches Verfahren. Dabei entsteht ein Vor-Körper durch Aufeinanderkleben von vielen Papierschichten.

Die Beschichtung eines Papiers oder einer Pappe erfolgt ebenfalls nach bekannten papiertechnischen Verfahren. Der Schlicker kann dabei beispielsweise auf das Papier gestrichen werden. Es ist jedoch auch möglich, das Papier in einem Tauchprozess mit einem Schlicker zu infiltrieren.

Bei der Pyrolyse eines derart hergestellten, mit Kohlenstoff angereicherten Papiers oder einer Pappe werden chemische Verbindung, die Kohlenstoff in gebundener Form aufweisen, zu amorphem Kohlenstoff umgewandelt. Diese Pyrolyse erfolgt bevorzugt in Inertgasatmosphäre, beispielsweise Stickstoff- oder Argonatmosphäre, oder im Vakuum.

Bei der Pyrolyse wird der Temperaturbereich bis 500°C bevorzugt langsam durchschritten, um eine vollständige Pyrolyse zu erreichen. Die Pyrolyse wird bis 1200°C, bevorzugt bis 800°C durchgeführt.

Bei der Pyrolyse entsteht ein Körper, der die ursprüngliche Struktur der Zellulosefasern, der Binde-, Dispergier- und Retentionsmittel und der darin eingebundenen Füllstoffe in einer Kohlenstoffstruktur abbildet. Keramische und/oder metallische Füllstoffe bleiben bei der Pyrolyse bevorzugt unverändert. Die Zellulosefasern stellen somit dem pyrolysierten Körper eine natürliche Porosität bereit. Die Porenstruktur ist biogen. Durch die Verwendung unterschiedlicher Materialien ebenso wie unterschiedlicher Anteile der Materialien kann die Porenstruktur gezielt eingestellt werden. Die Porenstruktur kann bei einem anschließenden Verfahren zur Umwandlung des pyrolysierten Papiers in einen keramischen Körper abgebildet werden. Durch die Porosität des pyrolysierten Papiers wird beispielsweise bei einer Siliziuminfiltration dem flüssigen Silizium ermöglicht, in das pyrolysierte Papier einzudringen und alle Bereiche es pyrolysierten Papiers zu infiltrieren.

In das Papier kann ein keramischer oder metallischer Füllstoff eingearbeitet werden. Dieser keramische bzw. metallische Füllstoffe wird bei der Pyrolyse üblicherweise nicht verändert. Keramische Füllstoffe können bei Temperaturen von bevorzugt oberhalb von 1200°C, insbesondere bevorzugt von über 1400°C gesintert werden. Beim Sintern derartiger Körper werden die keramischen Füllstoffe miteinander verbacken. Die Struktur wird somit dauerhaft gefestigt. Beim Einbringen von Metallen als Füllstoffen bzw. beim Eintauchen eines pyrolysierten Papiers in flüssiges Metall kann der Körper in einen keramischen Körper überführt werden. Dies soll im folgenden exemplarisch anhand von Silizium dargestellt werden. Es ist jedoch auch möglich, andere Carbid-bildende Metalle zu verwenden.

Wird Silizium in Form von Siliziumfüllstoffen direkt in das Papier eingebracht, oder wird das pyrolysierte Papier in flüssiges Silizium eingetaucht, so reagiert der elementare Kohlenstoff mit dem elementaren Silizium zu Siliziumcarbid. Durch die Umwandlung des Kohlenstoffs in Siliziumcarbid wird die ursprüngliche Struktur des Kohlenstoffs, insbesondere die poröse Struktur in dem Siliziumcarbid abgebildet. Zusätzlich können Bereiche mit reinem Silizium bzw. Bereiche mit reinem Kohlenstoff nach der Umwandlung vorliegen. Bereiche von elementarem Kohlenstoff können beispielsweise in Form von Graphit vorliegen und als Schmiermittel insbesondere bei der Verwendung von derartigen Keramiken bei Anwendungen, bei denen der Abrieb der Keramiken vorgesehen ist, beispielsweise bei Bremsscheiben, dienen. Bereiche mit elementarem Kohlenstoff können beispielsweise auch Kohlenstofffasern sein, die während des Silizierprozesses aufgrund ihrer Kompaktheit oder Oberflächenbeschaffenheit nicht in Siliziumcarbid umgewandelt werden und daher auch nach dem Silizieren als Kohlenstofffaser vorliegen. Sie können in dem resultierenden keramischen Verbundwerkstoff eine Faserverstärkung darstellen.

Der Anteil des sich bildenden Siliziumkarbides kann durch die Steuerung der Verdichtung des Papiers beeinflusst werden. Mit zunehmender Verdichtung liegt nach der Pyrolyse mehr Kohlenstoff pro Volumeneinheit vor, welcher mit Silizium zu Siliziumcarbid umgesetzt werden kann. Eine allzu starke Verdichtung setzt die Infiltrierbarkeit des Kohlenstoffkörpers herab und führt vermehrt zu nicht umgesetztem Kohlenstoff in dem resultierenden keramischen Verbundwerkstoff.

Eine weitere Möglichkeit, den Siliziumcarbidanteil in dem resultierenden keramischen Verbundwerkstoff zu erhöhen, stellt der Einsatz von Siliziumcarbidpulver als zusätzlichen Füllstoff bei der Papierherstellung dar. Dieser Füllstoff ergänzt in dem resultierenden Werkstoff das Siliziumcarbid, welches sich aus der Reaktion des Siliziums mit dem Kohlenstoff des pyrolysierten Papiers gebildet hat. Das Infiltrieren erfolgt bevorzugt in Inertgasatmosphäre bei einer Temperatur oberhalb des Schmelzpunkts des Metalls und bevorzugt bis zu einer Temperatur von 1800°C. Durch die Infiltration mit Silizium können auch Bereiche mit reinem Silizium in dem Körper vorliegen. Dadurch entsteht ein sogenannter MMC (Metall-Matrix-Composite)-Körper, insbesondere eine Si-SiC-Keramik.

Die verschiedenen Papiere der vorliegenden Erfindung können vielfältig verwendet werden. Im folgenden sollen einige Verwendung genannt werden, ohne jedoch darauf beschränkt zu sein.

Im Grünzustand kann das mit Kohlenstoff angereicherte Papier beispielsweise als physikalisch/chemisch aktiver, dünner und flächiger Verbundwerkstoff verwendet werden. Solche Verwendungen schließen die Verwendung als Luftfilter, als Sorptionsmedium für Gase und/oder Flüssigkeiten und im ABC-Schutz ein. Da Kohlenstoff auch als elektrisch leitfähige Modifikation eingebracht werden kann, können die Papiere auch als Batterieelektroden verwendet werden.

Nach der Pyrolyse können die entstandenen Kohlenstoffstrukturen ebenfalls als Luftfilter, als Sorptionsmedium für Gase und/oder Flüssigkeiten sowie im ABC-Schutz verwendet werden. Auch die Verwendung als Batterieelektrode ist nach wie vor möglich. Zudem können die pyrolysierten Papiere als dünnwandige Konstruktionsmaterialien sowie für Brennstoffzellen verwendet werden.

Nach einer Infiltration bzw. Keramisierung können die keramischen Membranen bevorzugt bei der Gas und/oder Flüssigfiltration, insbesondere in der Mikro-, Ultra- und/oder Nanofiltration verwendet werden. Insbesondere sind durch die papiertechnischen Herstellungsverfahren Filterkonstruktionen realisierbar, welche mittels konservativer Verfahren wie beispielsweise Extrudieren nicht realisiert werden können. Es können großflächige, dünne, insbesondere kleiner 500 µm dicke, keramische Substrate hergestellt werden. Diese können durch papiertechnische Streichverfahren auch als Mehrschichtsysteme realisiert werden. Somit können unterschiedliche Eigenschaften in einem einzigen keramischen Filter realisiert werden.

Auch als Porenbrenner können keramisierte Papiere vorteilhaft eingesetzt werden. Insbesondere sind derartige Papiere gegenüber höheren Temperaturen, beispielsweise Temperaturen von 2000°C gegenüber inert. Bei Brennersystemen soll die Porengröße im Bereich von 2 bis 6 mm liegen. Solche Porengrößen können durch Wellenstrukturen, wie sie effektiv mit der papiertechnischen Formgebung erreicht werden können, leicht realisiert werden. Daher sind keramisierte Pappen für einen Einsatz im Bereich der Porenbrenner insbesondere bevorzugt.

Zudem können keramisierte Papiere dazu dienen, dünnwandige und dichte Keramikelemente herzustellen. Derartige Bauelemente sind beispielsweise für keramische Wärmetauscher von großem Interesse. Auch im Bereich von Dünnschichtsolarzellen können keramisierte Papiere verwendet werden.

Die vorliegende Erfindung wird im Folgenden anhand bevorzugter Ausführungsbeispiele und begleitenden Figuren beschrieben. Diese Beispiele sollen jedoch den Geltungsbereich der vorliegenden Erfindung nicht beschränken, sondern der Geltungsbereich soll lediglich durch die beigefügten Ansprüche definiert werden. In den Figuren zeigen:
Fig. 1 eine REM-Aufnahme eines mit Graphit angereicherten Papiers; und
Fig. 2 eine REM-Aufnahme eines mit Russ angereicherten Papiers.
Fig. 3 Ablauf der Herstellung eines Papiers gemäß eines Ausführungsbeispiels

### Beispiele

### 1. Graphitpapier, unbeschichtet:

Herstellung eines kreisrunden Laborblattes mit einem Durchmesser von 20 cm und einem Flächengewicht von 320 g/m² am Laborblattbildner nach dem Rapid-Köthen-Verfahren:
Zu 900g einer Zellstoffsuspension (Feststoffgehalt 0,5 Gew.-%) werden 13,5 g kationisches Polymer (Katiofast VFH Feststoffgehalt 0,2 Gew.-%), 14,4 g Graphitslurry (4,5 g Wasser + 4,5 g Graphitpulver + 4,5 g Benetzungsmittel (Feststoffgehalt 0,2 Gew.-%) + 0,9 g Dispergiermittel (Feststoffgehalt 0,2 Gew.-%)) und 24 g Latexemulsion (Feststoffgehalt 4 Gew.-%) zugegeben. Das entstandene Stoffgemisch wird über ein Papiersieb zu einem Blatt ausgebildet. Das entstandene Blatt wird anschließend getrocknet. Es entsteht ein Papier mit folgender Zusammensetzung:

| **Komponenten:** | **Anteil am Gesamtpapier (atro)** |
|---|---|
| Zellstoff: Nadelholzzellstoff ungebleicht | 44,99 Gew.-% |
| Graphitpulver (< 10 µm) | 44,99 Gew.-% |
| Latex, Hycar 1562X117, Noveon (anionisch) | 9,60 Gew.-% |
| Catiofast VFH (kationisches Polymer) | 0,30 Gew.-% |
| Benetzungsmittel Lumiten P-F, BASF (für Graphit) | 0,10 Gew.-% |
| Dispergiermittel Polysalz S, BASF (für Graphit) | 0,02 Gew.-% |

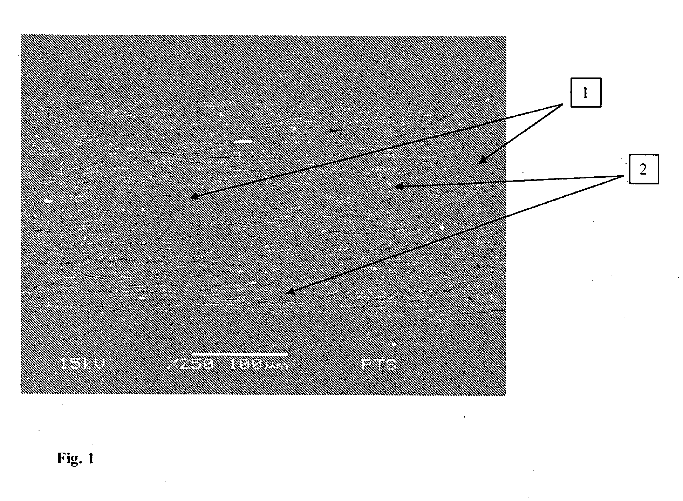

Eine REM-Aufnahme eines Schnittes des Blattes ist in Figur 1 gezeigt. Dabei sind die Bereiche des Nadelholzzellstoffs (2) ebenso wie die Bereiche des Graphits (1) deutlich zu erkennen.

### 2. Rußpapier, unbeschichtet:

Herstellung eines kreisrunden Laborblattes mit einem Durchmesser von 20 cm und einem Flächengewicht von 255 g/m² am Laborblattbildner nach dem Rapid-Köthen-Verfahren:
Zu 950g Zellstoffsuspension (Feststoffgehalt 0,5 Gew.-%) werden 14,25 g kationisches Polymer (Catiofast VFH, Feststoffgehalt 0,2 Gew.-%), 10,55 g Rußpaste (Feststoffgehalt 45 Gew.-%) und 12,5 g Latexemulsion (Feststoffgehalt 4 Gew.-%)zugegeben. Der entstandene Brei wird zu einem Blatt ausgebildet. Das entstandene Blatt wird anschließend getrocknet. Es entsteht ein Papier mit folgender Zusammensetzung:

| **Komponenten:** | **Anteil am Gesamtpapier (atro):** |
|---|---|
| Zellstoff: Nadelholzzellstoff ungebleicht | 48,15 Gew.-% |
| Ruß (Rußpaste, Derussol 345, Degussa) | 46,65 Gew.-% |
| Latex, Hycar 1562X117, Noveon (anionisch) | 4,91 Gew.-% |
| Catiofast VFH, BASF (kat. Polymer) | 0,29 Gew.-% |

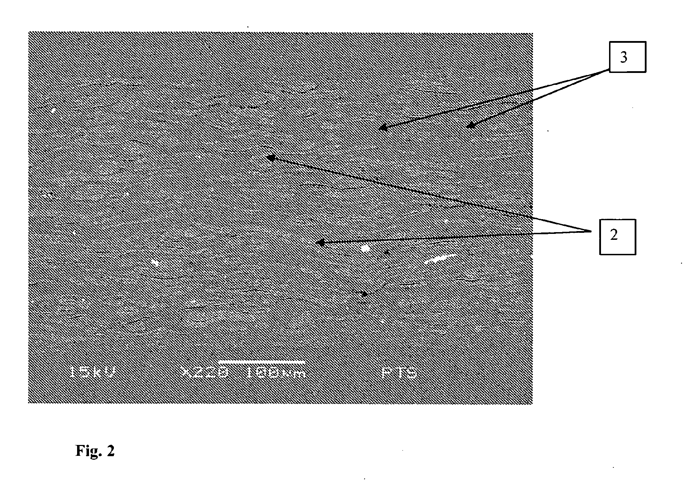

Eine REM-Aufnahme eines Schnittes des Blattes ist in Figur 2 gezeigt. Dabei sind die Bereiche des Nadelholzzellstoffs (2) ebenso wie die Bereiche des Rußes (3) deutlich zu erkennen.

### 3. Ruß/SiC-Papier, beidseitig beschichtet für die Pyrolyse und anschließende Si-Infiltration

Herstellung eines kreisrunden Laborblattes mit einem Durchmesser von 20 cm und einem Flächengewicht von 382 g/m² am Laborblattbildner nach dem Rapid-Köthen-Verfahren:
Zu 547g Zellstoffsuspension (Feststoffgehalt 0,5 Gew.-%) werden 12 g kationisches Polymer (Catiofast VFH, Feststoffgehalt 0,2 Gew.-%), 8 g Rußpaste (Feststoffgehalt 45 Gew.-%), 7,2 g SiC-Slurry (Feststoffgehalt 50 Gew.-%), 2,4 g Buchenmehlslurry (Feststoffgehalt 50 Gew.-%) und 21 g Latexemulsion (Feststoffgehalt 4 Gew.-%) zugegeben. Das entstandene Blatt wird anschließend getrocknet. Es entsteht ein Papier mit folgender Zusammensetzung:

| **Komponenten:** | **Anteil am Gesamtpapier (atro):** |
|---|---|
| Zellstoff: Nadelholzzellstoff ungebleicht | 22,7 Gew.-% |
| Ruß (Rußpaste, Derussol 345, Degussa) | 30 Gew.-% |
| SiC-Pulver (F1200, ESK-SIC GmbH, Ø < 5 µm) | 30 Gew.-% |
| Holzmehl Buche (HW630 PU, JRS, Ø < 50 µm) | 10 Gew.-% |
| Latex, Hycar 1562X117, Noveon (anionisch) | 7 Gew.-% |
| Catiofast VFH, BASF (kat. Polymer) | 0,2 Gew.-% |

Anschließend erfolgt eine Beschichtung des Papiers mit einem Schlicker, der folgende Zusammensetzung aufweist:

| | |
|---|---|
| Ruß (Rußpaste, Derussol 345, Degussa) | 30 Gew.-% (atro) |
| SiC-Pulver (F1200, ESK-SIC GmbH, Ø < 5 µm) | 30 Gew.-% (atro) |
| Holzmehl Buche (HW630 PU, JRS, Ø < 50 µm) | 28 Gew.-% (atro) |
| Latex, Aconal 360 D, BASF | 12 Gew.-% (atro) |

Dabei beträgt der Feststoffgehalt der Rußpaste 48 Gew.-%, der Feststoffgehalt der SiC-Pulver-Slurry 70 Gew.-%, der Feststoffgehalt der Holzmehlslurry 50 Gew.-% und der Feststoffgehalt der Latexemlusion 4 Gew.-%. Der Feststoffgehalt der resultierenden Beschichtungsslurry oder des -schlickers beträgt 50%. Die Beschichtungsslurry wird mittels Rakel mit einer Schichtdicke von 100 µm aufgetragen. Bei der Pyrolyse zeigte das beschichtete Papier einen Gewichtsverlust von 28%. Über eine anschließende Infiltration mit flüssigem Silizium bei 1400°C wird eine Si-SiC-Keramik hergestellt.

## Patentansprüche

1. Verfahren zur Herstellung eines mit elementarem Kohlenstoff angereicherten Papiers oder Pappe mit den Schritten:
- Vermischen mindestens eines bei der Papierherstellung üblichen Faserstoffs und mindestens eines Füllstoffs, der elementaren Kohlenstoff enthält, in Wasser als Lösungsmittel zu einem Brei;
- Zugeben von Stärke und/oder Latex zu dem Brei, um einen gebundenen Brei herzustellen;
- Verarbeiten des gebundenen Breis zu einem Papier und/oder einer Pappe, wobei der Gehalt an elementarem Kohlenstoff mindestens 40 Vol.-%, bezogen auf das Feststoffvolumen des Papiers oder der Pappe, beträgt, und wobei der Gesamtfüllstoffgehalt aller vorliegenden Füllstoffe von 40 bis 90 Vol.-%, bezogen auf das Feststoffvolumen des Papiers oder der Pappe, beträgt.

2. Verfahren nach Anspruch 1, **dadurch gekennzeichnet, dass** beim Vermischen des Faserstoffs mit dem Füllstoff weitere Zusatzstoffe, bevorzugt Benetzungs- und/oder Dispergier- und/oder Retentionsmittel, zugegeben werden.

3. Verfahren nach einem der Ansprüche 1 oder 2, **dadurch gekennzeichnet, dass** beim Vermischen des Faserstoffs mit mindestens einem Füllstoff ein Retentionsmittel, bevorzugt ein kationisches Retentionsmittel, besonders bevorzugt ein kationisches Polymer, zu einer Lösung von Faserstoff in einem Lösungsmittel zugegeben wird, bevor der Füllstoff zugegeben wird.

4. Verfahren nach einem der Ansprüche 1-3, wobei der Gesamtfeststoffgehalt in dem Brei im Bereich von 0,1 bis 15 Gew.-%, bevorzugt 0,5 bis 3 Gew.-%, liegt.

5. Verfahren nach einem der Ansprüche 1-4, **dadurch gekennzeichnet, dass** die Stärke und/oder der Latex geladene Stärke und/oder geladener Latex, bevorzugt negativ geladene Stärke und/oder negativ geladener Latex ist.

6. Verfahren nach einem der Ansprüche 1-5, **dadurch gekennzeichnet, dass** zu einem Faserstoff ein positiv geladenes Retentionsmittel, bevorzugt im Überschuss in Bezug auf den Faserstoff, zugegeben wird, bevor der Füllstoff zugegeben wird, um einen Brei herzustellen, wobei nach Zugabe von positiv geladenem Retentionsmittel und Füllstoff vorzugsweise ein negativ geladener Latex und/oder eine negativ geladene Stärke zugegeben wird.

7. Verfahren nach einem der Ansprüche 1-6, **dadurch gekennzeichnet, dass** zu einem Faserstoff eine positiv geladene Stärke, bevorzugt im Überschuss in Bezug auf den Faserstoff, zugegeben wird, bevor der Füllstoff zugegeben wird, um einen Brei herzustellen, der Schritt des Zugebens von Stärke und/oder Latex die Zugabe einer negativ geladenen Stärke umfasst, und vor dem Verarbeiten des gebundenen Breis zusätzlich ein positiv geladenes Retentionsmittel, bevorzugt ein positiv geladenes Polymer, zugegeben wird.

8. Verfahren zur Beschichtung eines Papiers oder einer Pappe gemäß einem oder mehreren der Ansprüche 1-7 , wobei das Papier oder die Pappe mit einem Schlicker beschichtet wird, wobei der Schlicker organische Bindemittel und/oder kohlenstoffhaltige und/oder keramische und/oder metallische und/oder ligno-cellulosehaltige Zusatzstoffe in Form von Pulvern und/oder Fasern uinfasst.

9. Verfahren gemäß einem oder mehreren der vorhergehenden Ansprüche, **dadurch gekennzeichnet, dass** der elementare Kohlenstoff in Form von Graphit, Aktivkohle, Ruß, Diamant, Diamantstaub, Fullerenen, Kohlenstoff-Nanotubes oder Kohlenstofffasern vorliegt.

10. Verfahren gemäß einem oder mehreren der vorhergehenden Ansprüche, **dadurch gekennzeichnet, dass** das Papier oder die Pappe neben elementarem Kohlenstoff als Füllstoff weitere Füllstoffe aufweist, wobei die weiteren Füllstoffe neben elementarem Kohlenstoff vorzugsweise ausgewählt sind aus metallischen Füllstoffen, bevorzugt Metalle, besonders bevorzugt Aluminium, Kupfer, Silizium, und/oder keramischen Füllstoffen, bevorzugt Carbide, Oxide, Nitride und Boride, besonders bevorzugt Siliziumcarbid, Borcarbid, Titancarbid, Aluminiumoxid, Zirkoniumoxid, Titandioxid, Siliziumnitrid, Aluminiumnitrid, Bornitrid und Titanborid, und/oder ligno-cellulosehaltigen Füllstoffen und/oder organischen Füllstoffen, bevorzugt Phenolharze, oder
dass das Papier oder die Pappe als Faserstoff Sulfatzellstoff, Sulfitzellstoff, nach thermomechanischem Verfahren (TMP) hergestellter Zellstoff, nach chemo-thermomechanischem Verfahren (CTMP) hergestellter Zellstoff, Baumwolle, Linters und/oder Holzschliff und deren Mischungen, enthält.

11. Verfahren zur Pyrolyse eines Papiers oder einer Pappe gemäß einem oder mehreren der Ansprüche 1-10, **dadurch gekennzeichnet, dass** das in Form eines Grünkörpers hergestellte Papier oder die Pappe einer Pyrolyse unterworfen wird, wobei die Pyrolyse in Inertgasatmosphäre bei einer Temperatur bis 1200°C, bevorzugt bis 800°C durchgeführt wird.

12. Papier oder Pappe, hergestellt nach einem Verfahren gemäß einem der Ansprüche 1-10 oder pyrolysiertes Papier oder Pappe, hergestellt gemäß Anspruch 11.

13. Verwendung eines pyrolysierten Papiers oder einer pyrolysierten Pappe gemäß Anspruch 12 als Luftfilter, Sorptionsmedium für Gase oder Flüssigkeiten, als Elektrode, insbesondere als Batterieelektrode, als dünnwandiges Konstruktionsmaterial oder für eine Brennstoffzelle.

14. Verfahren zum Infiltrieren eines mit elementarem Kohlenstoff angereicherten Papiers oder Pappe oder eines pyrolysierten Papiers oder einer pyrolysierten Pappe gemäß Anspruch 12, **dadurch gekennzeichnet, dass** das Papier oder die Pappe mit einem flüssigen Metall infiltriert wird, wobei das Metall vorzugsweise Silizium, Aluminium oder Kupfer ist, und wobei das Infiltrieren in Inertgasatmosphäre und/oder bei einer Temperatur bis 1800°C durchgeführt wird.

15. Keramischer Körper, hergestellt nach einem Verfahren gemäß Anspruch 14.

## Claims

1. Method for the production of a paper or paperboard enriched with elemental carbon having the steps of:
- mixing at least one fibre material conventional in papermaking and at least one filler comprising elemental carbon, in water as a solvent, to form a slurry;
- adding starch and/or latex to the slurry to produce a bound slurry;
- processing the bound slurry to a paper and/or a paperboard, wherein the content of elemental carbon is at least 40 vol.%, based on the solids volume of the paper or the paperboard, and wherein the total filler content of all the fillers present is from 40 to 90 vol.%, based on the solids volume of the paper or the paperboard.

2. Method according to claim 1, **characterised in that** during mixing of the fibre material with the filler further additives, preferably wetting and/or dispersing and/or retention agents, are added.

3. Method according to one of claims 1 or 2, **characterised in that** during mixing of the fibre material with at least one filler a retention agent, preferably a cationic retention agent, particularly preferably a cationic polymer, is added to a solution of the fibre material in a solvent before the filler is added.

4. Method according to one of claims 1 - 3, wherein the total solids content in the slurry is in the range of from 0.1 to 15 wt.%, preferably 0.5 to 3 wt.%.

5. Method according to one of claims 1 - 4, **characterised in that** the starch and/or the latex is charged starch and/or charged latex, preferably negatively charged starch and/or negatively charged latex.

6. Method according to one of claims 1 - 5, **characterised in that** a positively charged retention agent, preferably in excess with respect to the fibre material, is added to a fibre material before the filler is added in order to produce a slurry, wherein after addition of positively charged retention agent and filler preferably a negatively charged latex and/or a negatively charged starch is added.

7. Method according to one of claims 1 - 6, **characterised in that** a positively charged starch, preferably in excess with respect to the fibre material, is added to a fibre material before the filler is added in order to produce a slurry, the step of addition of starch and/or latex includes the addition of a negatively charged starch, and before the processing of the bound slurry a positively charged retention agent, preferably a positively charged polymer, is additionally added.

8. Method of coating a paper or a paperboard according to one or more of claims 1 - 7, wherein the paper or the paperboard is coated with a slip, wherein the slip comprises organic binders and/or carbon-containing and/or ceramic and/or metallic and/or lignocellulose-containing additives in the form of powders and/or fibres.

9. Method according to one or more of the preceding claims, **characterised in that** the elemental carbon is present in the form of graphite, active charcoal, carbon black, diamond, diamond dust, fullerenes, carbon nanotubes or carbon fibres.

10. Method according to one or more of the preceding claims, **characterised in that** the paper or the paperboard has, in addition to elemental carbon as a filler, further fillers, wherein the further fillers, in addition to elemental carbon, are preferably selected from metallic fillers, preferably metals, particularly preferably aluminium, copper, silicon, and/or ceramic fillers, preferably carbides, oxides, nitrides and borides, particularly preferably silicon carbide, boron carbide, titanium carbide, aluminium oxide, zirconium oxide, titanium dioxide, silicon nitride, aluminium nitride, boron nitride and titanium boride, and/or lignocellulose-containing fillers and/or organic fillers, preferably phenolic resins, or **in that** the paper or the paperboard comprises as the fibre material sulphate pulp, sulphite pulp, pulp produced by the thermomechanical process (TMP), pulp produced by the chemi-thermomechanical process (CTMP), cotton, linters and/or mechanical wood pulp and mixtures thereof.

11. Method for the pyrolysis of a paper or a paperboard according to one or more of claims 1 - 10, **characterised in that** the paper produced in the form of a green body or the paperboard is subjected to a pyrolysis, wherein the pyrolysis is carried out in an inert gas atmosphere at a temperature up to 1,200 ºC, preferably up to 800 ºC.

12. Paper or paperboard produced by a method according to one of claims 1 - 10 or pyrolysed paper or paperboard produced according to claim 11.

13. Use of a pyrolysed paper or a pyrolysed paperboard according to claim 12 as an air filter, an absorbent medium for gases or liquids, as an electrode, in particular as a battery electrode, as a thin-walled construction material or for a fuel cell.

14. Method for infiltrating a paper or paperboard enriched with elemental carbon or a pyrolysed paper or a pyrolysed paperboard according to claim 12, **characterised in that** the paper or the paperboard is infiltrated with a liquid metal, wherein the metal is preferably silicon, aluminium or copper, and wherein the infiltration is carried out in an inert gas atmosphere and/or at a temperature up to 1,800 ºC.

15. Ceramic body produced by a method according to claim 14.

## Revendications

1. Procédé de fabrication d'un papier ou d'un carton enrichi en carbone élémentaire, avec les étapes :
- mélange d'au moins une substance fibreuse courante dans la fabrication du papier et d'au moins une charge qui contient du carbone élémentaire, dans de l'eau en tant que solvant, pour obtenir une bouillie ;
- ajout d'amidon et/ou de latex à la bouillie, afin de fabriquer une bouillie liée ;
- transformation de la bouillie liée en papier et/ou en carton, où la teneur en carbone élémentaire se situe à au moins 40 % en volume par rapport au volume des matières solides du papier ou du carton, et où la teneur en charges totales parmi toutes les charges présentes se situe entre 40 et 90 % en volume par rapport au volume des matières solides du papier ou du carton.

2. Procédé selon la revendication 1, **caractérisé en ce que**, lors du mélange de la substance fibreuse avec la charge, d'autres produits auxiliaires, de préférence, des agents améliorant la mouillabilité, et/ou la dispersion, et/ou la rétention, sont ajoutés.

3. Procédé selon l'une des revendications 1 ou 2, **caractérisé en ce que**, lors du mélange de la substance fibreuse avec au moins une charge, un agent améliorant la rétention, de préférence, un agent améliorant la rétention cationique, de manière particulièrement préférée, un polymère cationique, est ajouté à une solution de substance fibreuse dans un solvant avant que la charge ne soit ajoutée.

4. Procédé selon l'une des revendications 1 à 3, dans lequel la teneur en matières solides totales dans la bouillie se situe dans une gamme de 0,1 à 15 % en poids, de préférence de 0,5 à 3 % en poids.

5. Procédé selon l'une des revendications 1 à 4, **caractérisé en ce que** l'amidon, et/ou le latex, est de l'amidon chargé, et/ou du latex chargé, de préférence, de l'amidon chargé négativement, et/ou du latex chargé négativement.

6. Procédé selon l'une des revendications 1 à 5, **caractérisé en ce qu'**un agent améliorant la rétention chargé positivement est ajouté à une substance fibreuse, de préférence en excès par rapport à la substance fibreuse, avant que la charge ne soit ajoutée, afin de fabriquer une bouillie, où, après l'ajout d'un agent améliorant la rétention chargé positivement et de la charge, de préférence, un latex chargé négativement, et/ou un amidon chargé négativement, sont ajoutés.

7. Procédé selon l'une des revendications 1 à 6, **caractérisé en ce qu'**un amidon chargé positivement, de préférence en excès par rapport à la substance fibreuse, est ajouté à une substance fibreuse avant que la charge ne soit ajoutée, afin de fabriquer une bouillie, l'étape d'ajout d'amidon et/ou de latex comprend l'ajout d'un amidon chargé négativement, et avant la transformation de la bouillie liée, un agent améliorant la rétention chargé positivement, de préférence, un polymère chargé positivement, est ajouté de manière complémentaire.

8. Procédé destiné au revêtement d'un papier ou d'un carton selon l'une ou plusieurs parmi les revendications 1 à 7, dans lequel le papier ou le carton sont revêtus par une barbotine, où la barbotine comprend des produits liants organiques, et/ou contenant du carbone, et/ou des produits auxiliaires à base de céramique, et/ou métalliques, et/ou lignocellulosiques, sous forme de poudres et/ou de fibres.

9. Procédé selon l'une ou plusieurs des revendications précédentes, **caractérisé en ce que** le carbone élémentaire se présente sous la forme de graphite, de charbon actif, de suie, de diamant, de poudre de diamant, de fullerènes, de nanotubes de carbone ou de fibres de carbone.

10. Procédé selon l'une ou plusieurs des revendications précédentes, **caractérisé en ce que** le papier ou le carton présente d'autres charges accompagnant le carbone élémentaire servant de charge, où les autres charges, accompagnant le carbone élémentaire sont choisies de préférence parmi des charges métalliques, de préférence des métaux, de manière particulièrement préférée de l'aluminium, du cuivre, du silicium, et/ou des charges à base de céramiques, de préférence, des carbures, des oxydes, des nitrures et des borures, de manière particulièrement préférée, du carbure de silicium, du carbure de bore, du carbure de titane, de l'oxyde d'aluminium, de l'oxyde de zirconium, du dioxyde de titane, du nitrure de silicium, du nitrure d'aluminium, du nitrure de bore et du borure de titane, et/ou des charges contenant des lignocelluloses, et/ou des charges organiques, de préférence, des résines phénoliques, ou que le papier ou le carton contiennent en tant que substance fibreuse de la cellulose au sulfate, de la cellulose au sulfite, de la cellulose fabriquée selon le procédé thermomécanique (TMP), de la cellulose fabriquée selon un procédé chimico-thermomécanique (CTMP), du coton, de la bourre et/ou des copeaux de bois et leurs mélanges.

11. Procédé de pyrolyse d'un papier ou d'un carton selon l'une ou plusieurs des revendications 1 à 10, **caractérisé en ce que** le papier ou le carton fabriqué sous la forme d'un corps de base est soumis à une pyrolyse, où la pyrolyse est effectuée sous l'atmosphère d'un gaz inerte à une température jusqu'à 1200 °C, de préférence jusqu'à 800 °C.

12. Papier ou carton, fabriqué d'après un procédé selon l'une des revendications 1 à 10 ou papier ou carton pyrolysé selon la revendication 11.

13. Utilisation d'un papier pyrolysé ou d'un carton pyrolysé selon la revendication 12 en tant que filtre pour l'air, milieu de sorption pour des gaz ou des liquides, en tant qu'électrode, notamment électrode de batterie, en tant que matériau de construction à parois minces ou destiné à une pile à combustible.

14. Procédé destiné à l'infiltration d'un papier ou d'un carton enrichis avec du carbone élémentaire ou d'un papier pyrolysé ou d'un carton pyrolysé selon la revendication 12, **caractérisé en ce que** le papier ou le carton est infiltré avec un métal liquide, où le métal est de préférence du silicium, de l'aluminium ou du cuivre, et où l'infiltration est effectuée sous l'atmosphère d'un gaz inerte et/ou à une température jusqu'à 1800 °C.

15. Corps en céramique fabriqué d'après un procédé selon la revendication 14.
